Europäisches Patentamt

**European Patent Office**

**Office européen des brevets**

(11) Veröffentlichungsnummer: **0 264 110**

**A1**

(12) **EUROPÄISCHE PATENTANMELDUNG**

(21) Anmeldenummer: 87114963.9

(22) Anmeldetag: **13.10.87**

(51) Int. Cl.⁴: **H02K 3/26** , H01F 5/00

(30) Priorität: **15.10.86 DE 3635152**

(43) Veröffentlichungstag der Anmeldung:
**20.04.88 Patentblatt 88/16**

(84) Benannte Vertragsstaaten:
**AT CH DE ES FR GB IT LI SE**

(71) Anmelder: **Hoegl, Helmut Dr.**
**Seitnerstrasse 28**
**D-8023 München-Pullach(DE)**

Anmelder: **Kern, Ralf M.**
**Assenbucherstrasse 67**
**D-8137 Berg-Leoni(DE)**

(72) Erfinder: **Hoegl, Helmut Dr.**
**Seitnerstrasse 28**
**D-8023 München-Pullach(DE)**
Erfinder: **Kern, Ralf M.**
**Assenbucherstrasse 67**
**D-8137 Berg-Leoni(DE)**

(74) Vertreter: **Kern, Ralf M., Dipl.-Ing. et al**
**Kern, Lang & Partner Patent- und**
**Rechtsanwältsbüro Postfach 14 03 29**
**D-8000 München 5(DE)**

(54) **Elektromagnetische Anordnung, insbesondere elektomagnetische Wicklung.**

(57) Eine elektromagnetische Anordnung, insbesondere eine elektromagnetische Wicklung mit voneinander elektrisch isolierten Stromleiter-Windungen, welche gegeneinander elektrisch isoliert sind und die Form einer elektrisch leitfähigen Folie aufweisen. Die Folie kann eine Metallbeschichtung auf einer elektrisch isolierten Kunststofffolie sein oder aus elektrisch leitfähigem Kunststoff mit einer Isolationsschicht zwischen den einzelnen Windungen der Wicklung bestehen.

Fig. 2

EP 0 264 110 A1

## Elektromagnetische Anordnung, insbesondere elektromagnetische Wicklung

Die Erfindung betrifft eine elektromagnetische Anordnung, insbesondere eine elektromagnetische Wicklung mit voneinander elektrisch isolierten Stromleiter-Wicklungen.

Die üblichen elektromagnetischen Wicklungen in z.B. Elektrospulen, Elektromotoren (Feld-und Ankerwicklungen, auch als Käfigläufer) Transformatoren etc. sind aus Metall-, vor allem aus Kupferdraht gewickelt und damit teuer, schwer und auch träge bzw. material-und herstellungmäßig entsprechend aufwendig.

Aufgabe der Erfindung ist die Ausbildung elektromagnetischer Wicklungen, bzw. Feldspulen, verschiedenster, in der Elektrotechnik verwendeter Art, welche diese Nachteile vermeiden und zudem platzsparender sowie in neuen Gestaltungsformen anwendbar sind.

Demgemäß besteht die Erfindung in einer elektromagnetischen Anordnung der eingagns genannten Art, wobei die Stromleiter-Wicklungen als elektrisch leitende Folie ausgebildet sind.

Im Gegensatz zu herkömmlich aufgebauten elektromagnetischen Wicklungen werden dabei die einzelnen Stromleiter-Wicklungen nicht einzeln lagenweise nebeneinander gewickelt, sondern vornehmlich lagenweise übereinander.

In dieser grundsätzlichen Ausführungsform kann die in der Wicklung gebildete Wärme daher lagenweise seitlich zur Folienandruckseite abgeführt werden.

Andererseits ist die erfindungsgemäße elektromagnetische Wicklung besonders im niedrigeren Leistungsbereich anwendbar, wofür ihr elektrokinetisch gewichtsmäßig leichter trägheitsarmer Aufbau besonders vorteilhaft ist (Lautsprecherspulen, Drosselspulen, Transformatoren in Leiterplattenschaltungen).

Die erfindungsgemäßen elektromagnetischen, aus Folien aufgebauten Wicklungen sind auch von besonderem Interesse für die Transformation der in strömenden Wasser-bzw. Luftmassen enthaltenen kinetischen Energie in elektrischen Strom. Sie sind vorzüglich geeignet für die Herstellung modular aufgebauter, röhrenförmiger und sehr leichter Stromgeneratoren. Modulare Stromgeneratoren ermöglichen es, je nach Verfügbarkeit an Rohenergie und Bedarf an Nutzenergie, verschiedene Generatoreinheiten elektrisch parallel oder hintereinander zu schalten.

Üblicherweise erfolgt die mechanische Kraftumsetzung in einer vom elektrischen Generator separaten Arbeitsmaschine (z.B. Turbine oder Windrad). Erfindungsgemäß werden die Teile des Generators unmittelbar von den Teilen der mechanischen Kraftübersetzung gebildet, indem die elektrischen Wicklungen in diesen integriert sind. Der Aufbau eines Wind-bzw. Wasserkraftwerkes aus Generatormodulen eröffnet somit große Vorteile für die individuelle, flexible übereinstimmung von Energie-Angebot und -Bedarf.

Erfindungsgemäß können die folienförmigen Stromleiter entweder aus dünnen Metallfolien bestehen, die ein-oder beidseitig mit elektrisch isolierendem Kunststoff versehen sind, oder aber vorzugsweise aus metallisch z.B. aus der Dampfphase oder galvanisch beschichtetem elektrisch isolierendem Kunststoff aufgebaut sein. Für die Oberflächenbeschichtung von Kunststoffen mit leitfähigen Werkstoffen sind verschiedene Verfahren bekannt, wie z.B. chemische und galvanische Metallisierungsverfahren, das Kaschieren mit Metallfolien, die Metallbedampfung, das Flammspritzen, die Kathodenzerstäubung, das Plasmaverfahren und die Verwendung von metallischen oder graphitgefüllten Anstrichstoffen. Auch die elktrostatische Aufladung der Kunststoffolien bzw. Vorbehandlung mit Klebstoffschichten kann zur Aufbringung leitfähiger Oberflächenbeläge herangezogen werden.

Als elektrisch isolierende Kunststoffe kommen erfindungsgemäß sowohl thermoplastische Polymere als auch härtbare Form-und Preßmassen in Frage:

1. Folienbildende, thermoplstische Kunststoffe, wie z.B.:
Polyäthylen und andere Polyolefine, wie z.B.: Äthylen-Copolymere; Polypropylen; Propylen - Copolymere; Polystyrol; Styrol-Butadien-Mischpolymerisat (SB); Arylnitril-Butadien-Styrol-Mischpolymerisat (ABS); Polyvinylchlorid; Vinylchlorid-Mischpolymerisate; Polyvinylidenchlorid und Copolymere des Vinylidenchlorids; Polyvinylchloridacetat; Polyvinylacetat-und Copolymere; Polyacrylnitril; Polymetharcrylsäure-methyl-und andere -ester; Polyäther, z.B. Polyphenylenoxid; Polyacetate, z.B. Polyformaldehyd; Polycarbonate; Polyester, z.B. Polyäthylenglykolterephtalat; Fluorhaltige Polymere, wie z.B. Polytetrafluoräthylen, Polytrifluorchloräthylen, Polyvinylidenfluorid, Polyvinylfluorid; Polyamide (durch Polykondensation bzw. durch Poly-addition hergestellt); Polyimide; Polybenzimidazol); Polyesterimide; Polysulfone; Polyäthersulfone; Polybenzoxacindion (aus Diisocyanaten + Dihydroxycarbonsäuren; Polyphenylen-Harze; Poly-p-Xylylen (Para-Xylol-Polymere); Polyurethane; Silikon-Harze; Zellulose-Derivate, z.B. Cellulose-Äther und - Ester.

2. Härtbare Harze und Formmassen bzw. Preßmassen, wie z.B.:
Phenoplaste; Aminoplaste; Alkyd-Harze; Polyesterharze; ungesättigte Polyester; Epoxid-Harze.

Im besonders vorteilhafter Ausführungsform kann die erfindungsgemäße Stromleiterwicklung auch aus einem elektrisch leitendem Kunststoff bestehen, wofür sowohl leitfähige Polymercompounds als auch Polymere mit sog. intrinsischer elektrischer Leifähigkeit verwendet werden können. Die leitfähigen Polymercompounds sind Kunststoffe mit eingearbeiteten leitfähigen Füllstoffen, wie z.B. Aluminiumpulver, -faser, -plättchen, Kohlenstoff-oder Graphit-fasern, Graphitpulver oder Ruß, Stahlfasern; metallisierten Glasfasern oder -kugeln. Als intrinsisch leitfähige Kunststoffe kommen mit geeigneten Elektronendonatoren (z.B. Metallatome) bzw. Elektronenakzeptoren (z.B. Jod-Atomen) dotierte Kunststoffe, wie z.B. Polyacetylen; Poly-pyrrol; Poly-para-phenylen; Poly-phenylen-sulfid; Poly-thiophen sowie polymere Metallkomplexe des Phthalocyanins, insbesondere auch Coextrudate des Aramid-Polymers Kevlar mit Phthalocyanin-Polymeren.

Die elektrisch isolierende Schicht zwischen den Windungen der elektrisch leitenden Kunststoff-Folie kann entweder mit dieser verbunden oder getrennt zwischengewickelt sein.

Eine speziell vorteilhafte Ausführungsform besteht darin, daß eine elektrisch isolierende Kunststoff-Folie mit einem zonenmäßig oder strichartig aufgebautem Muster aus Stromleiterbahnen - beispielsweise aus gebundenem Kohlestoff-oder Metallpulver - versehen, z.B. bedruckt wird, wobei mit einer einzigen Kunststoffbahn-Windung eine Vielzahl von Stromleitern einander zugeordnet werden können, und zwar entweder in Parallelschaltung der einzelnen Windungen öoder durch besondere Anordnung auch in Serienschaltung. Die Zusammenschaltung von einzelnen Stromleiterbereichen zu höheren Windungszahlen kann beispielsweise durch besondere Kontakte an den zugehörigen Enden zu verbindenden Stromleiter-Bereichen erfolgen.

Eine zonenweise oder streifenartige Aufteilungsmöglichkeit zwischen elektrisch leitenden Bahnen und elektrisch isolierenden Folienbereichen ermöglicht eine Vielzahl spezieller Anwendungsmöglichkeiten.

Die Ausführung der elektrischen Stromleiter als Folien ermöglicht z.B. das Wickeln von Rohren, deren Rohrwandung praktisch aus Wicklungslagen einer elektromagnetischen Wicklung besteht, sodaß ein derartiges Rohr - entsprechend in wasserdichten Kunststoff eingehüllt - auch in Wasser einsetzbar ist

Durch Anordnung von Permanent - oder Elektromagneten und diesen zugeordneter Lage der Wicklungen bzw. der Stromleiter (rohrlängs oder -schräg zur Rohlängsachse) kann z.B. eine einfache Erzeugung von Elektrizität durch Wasserkraft erfolgen.

Bei Anordnung von zonenweisen bzw. streifenweisen Stromleitern in Abstimmung mit der Phasenlage der Feldmagnete ist auch eine vereinfachte Ausführung der Kommutatoren möglich.

In der Ausführung der Erfindung als Wicklungen für Transformatoren, Drossel etc. ist deren erhebliche Vereinfachung in der Herstellung und Handhabung gegeben.

Die Erfindung ist nachstehend in mehreren Ausführungsbeispielen näher beschrieben:
Es zeigt:
Fig. 1 Die Darstellung einer erfindungsgemäßen Anordnung mit einer erfindungsgemäßen elektromagnetischen Wicklung,
Fig. 2 eine Fig. 1 ähnliche Anordnung, jedoch mit quer zur Spulenachse angeordneten Stromleitern,
Fig. 2a eine grundsätzliche Darstellung einer erfindungsgemäßen Wicklung aus einer Folie,
Fig. 3 eine erfindungsgemäße Anordnung von streifen-bzw. zonenweisen erfindungsgemäßen Stromleitern auf dem Umfang eines Zylinders bzw. eines Rohres,
Fig. 4 einen Querschnitt längs IV - IV in Fig. 3,
Fig. 5 eine abgewandelte Ausführungsform zur Ausbildung gemäß Fig. 3,
Fig. 6 und 7 Längsschnitte durch lagenweise Anordnungen von erfindungsgemäßen Stromleiter-Folien auf dem Umfang eines Zylinders,
Fig. 8 eine weitere Anwendungsform einer folienartigen Wicklungsanordnung und
Fig. 9a und 9b eine zusätzliche Verbesserung der Wicklungsanordnung gemäß Fig. 2

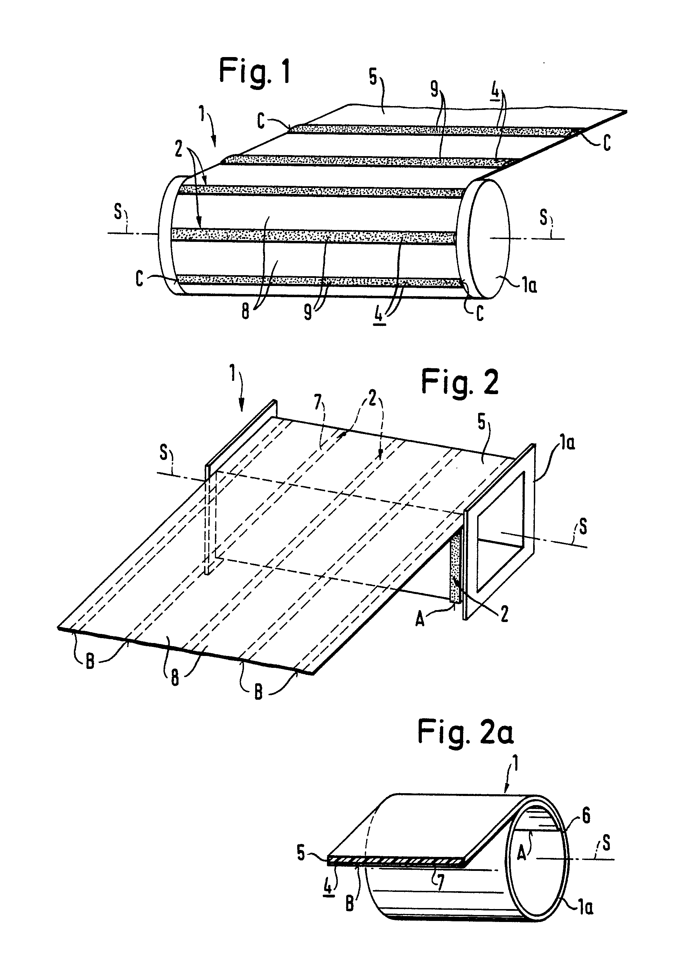

Die Fig. 1 und 2 sowie 2a zeigen drei grundsätzliche Ausführungsformen der Ausbildung und Anordnung einer Folien-Metallbeschichtung 4 auf einer elektrisch isolierenden Kunststoff-Folie 5 als Isolierung der einzelnen Stromleiter-Wicklungen 2 voneinander, und zwar schematisch als elektromagnetische Wicklung 1 mit jeweils einer Spulen-Längsachse S dargestellt.

In Fig. 1 sind die Stromleiter-Wicklungen 2 in Längsrichtung der Spule 1a als Streifen 9 auf der elektrisch isolierenden Kunststoff-Folie 5 angeordnet, welche zugleich isolierende Zonenbereiche 8 zwischen den Stromleitern bildet.

In Fig. 2 sind die Stromleiter-Wicklungen 2 in Umfangsrichtung auf der elektrisch isolierenden Kunststoff-Folie 5 vorgesehen, welche um einen rechteckigen statt runden (Fig. 1) Spulenkern mit der Längsachse S derart gewickelt ist, daß die einzelnen Stromleiter-Wicklungen 2 zur Vermeidung von Biege - Zug - Kräften auf der Innenseite der Kunststoff-Folie 5 angeordnet ist, wobei die Stromleiter-Wicklungen 2 z.B. auch als in sich gebundene Metallschicht (2) aus Meatllpulver vorliegen können. Bei mehr als einer, voneinander getrennten aber übereinander oder miteinander gewickelten Wicklungen, beispielsweise Primär-und Sekundärwicklung eines Transformators, können die einzelnen Stromleiter-Wicklungen 2 in unterschiedlicher Verteilung und Dichte - beispielsweise auf Lücke zueinander - auf der Kunststoff-Folie 5 angeordnet sein.

Die jeweiligen Enden - Innenende A und Außenende B (Fig. 2) bzw. Seitenende C (Fig. 1) - sind als Kontakte zum elektrischen Anschluß der Stromleiter-Wicklungen vorgesehen.

In Fig. 2a ist eine elektromagnetische Wicklung 1 mit zwischen beiden Stirnenden durchgehend ausgebildeter -also nicht in Streifen 9 aufgeteilter -Metallbeschichtung 4 versehener Stromleiter-Wicklung 2 dargestellt, und zwar am vorderen Rand als Querschnitt durch die Stromleiter-Wicklung 2.

Sowohl die Dicke der isolierenden Kunststoff-Folie 5 als auch die Dicke der Stromleiter 2 bzw. der Metallbeschichtung 4 oder der Metallschicht 7 aus metallstaubhaltigem Pulver kann je nach notwendiger Leistungsaufnahme nur wenige $\mu$m betragen.

Die Stromleiter 2 und die Kunststoff-Folie 5 können entweder fest miteinander verbunden sein (Fig. 1, Fig. 2) oder auch unabhängig voneinander auf die Spule 1a (beispielsweise in der Ausführung gemäß Fig. 2a) gewickelt sein.

Die Stromleiter 2 können - ob in Streifen 9 oder als durchgehende Bahnen gemäß Fig. 2a - vorzugsweise auch aus elektrisch leitendem Kunststoff bestehen, welche als Beispiele einleitend aufgeführt sind.

In den gegebenen Ausführungsformen sind elektromagnetische Wicklungen einfacher herstellbar, Leichter, billiger und auch kompakter sowie in vorteilhafter Weise auf die unterschiedlichste Weise an verschiedene Anwendungen anpaßbar.

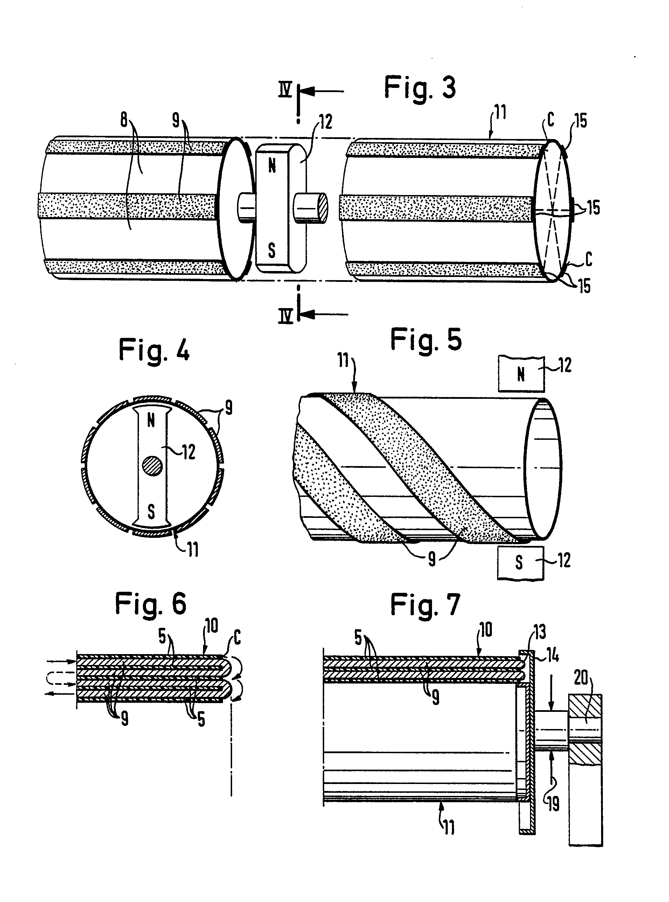

In den in den Fig. 3 bis 7 wiedergegebenen Abwandlungen ist ein konkretes Ausführungsbeispiel spezieller Anwendung, nämlich ein rohrförmiger Generator zur Nutzung von Strömungsenergien von Wasser oder Luft, dargestellt.

Die elektromagnetischen Wicklungen 1 sind in Form von Streifen 9 auf einem elektrisch leitenden zylindrischen Rohr 11 angeordnet, die auch ähnlich Fig. 1 mittels elektrisch isolierender Kunststoff-Folie 5 lagenweise übereinander gewicklelt sein können (s. Fig. 6 und 7, Lagen 10). Dabei sind die Seitenenden C der einzelnen Stromleiter - Streifen 9 an den Stirnenden des Rohrs 11 entweder nebeneinanderliegend (Fig. 6) miteinander verbunden oder in Parallelschaltung miteinander über Kombinationskontakte 15 (Fig. 3) diametral sich gegenüberliegend verbunden, sodaß sich auf diese Weise geschlossene Stromleiterschleifen ergeben.

Diese diametral über die Stirnseite des Rohrs 11 verlaufende elektrische Verbindung der Streifen 9 bzw. ihrer Lagen 10 mittels ihrer Kombinationskontakte 15 (welche ebenso für die grundsätzliche Ausführungsform gemäß Fig. 1 anwendbar ist) erfolgt gemäß Fig. 7 über Stirnkappen bzw. eine Stirnkappenanordnung 14, mit welcher das zylindrische Rohr 11 drehfähig in einem Drehlager 20 gelagert ist. Auch die Stromabnahme erfolgt über Kommutatoren bzw. Bürsten 19 im Zentrum der Stirnkappenanordnung 14 (Fig. 7).

Zur Stromerregung kann ein entweder im Inneren des Rohrs 11 angeordneter Permanentmagnet 12 (Fig. 3 und 4) oder auch ein Elektromagnet dienen. Gemäß Fig. 5 kann der Permanentmagnet auch außerhalb des aus folienartigen elektromagnetischen Wicklungen aufgebauten Rohrs 11 angeordnet sein. Dabei dienen die folienartigen Wicklungen 2 zugleich dem Aufbau und der Festigkeit des Rohrkörpers. Derartige Generatoren können also leichtgewichtig und - mittels allseitiger Kunststoff-Verriegelung bzw. -Abdichtung aufgebaut sein und sogar innerhalb des strömenden Wassers arbeiten, wobei die günstigere Dielektrizitätskonstante innerhalb des Wassers zusätzliche Vorteile bietet. Der Antrieb des Rohrs 11 als Generator kann entweder an seinem Umfange oder an der Innenseite des Rohrs in Form von Leitflächen angeordnet sein.

Wenn gemäß Fig. 4 und 5 die Streifen 9 - schräg auf dem Rohrumfang und die Felderregung analog dazu angeordnet sind, ergibt sich auch eine vereinfachte Stromabnahme am Kommutator 19.

Wenn die Aufbringung der Streifen 9 bzw. der Stromleiter 2 in Form von Aufdrucken oder anderer Anbringung auf der isolierenden Kunststoff-Folie 5 erfolgt, können die Stromleiterbahnen sehr eng und in unterschiedlichster Form auf der Folie 5 angeordnet sein. Diese Art der Anbringung eignet sich auch besonders für gemäß Fig. 1 gewickelten aber flach um einen plattenartigen Transformatorkern angeordneten elektromagnetischen Wicklungen 1 als leichter und flacher Transformator in modernen Schaltungen.

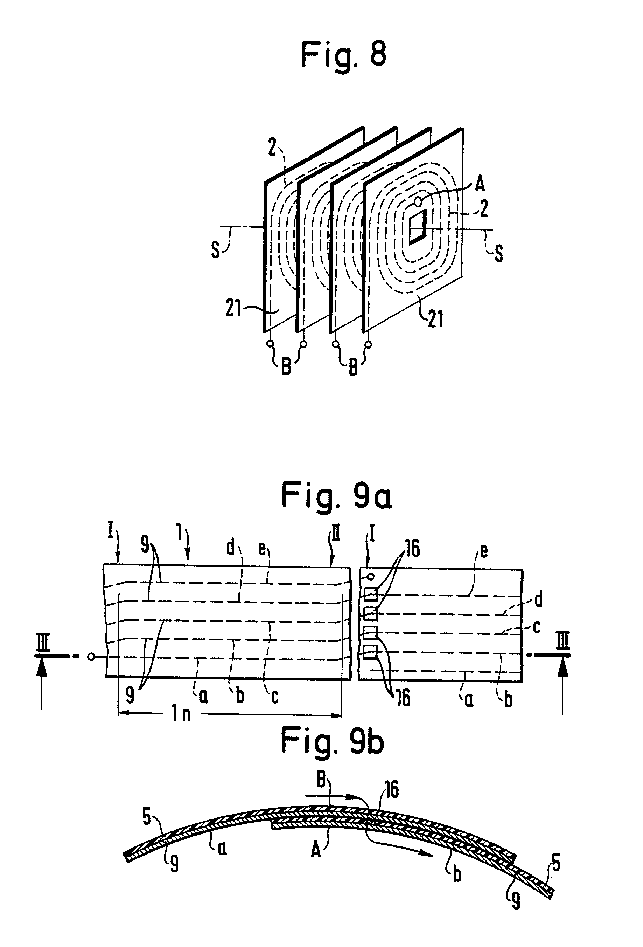

Auch kann jede elektromagnetische Wicklung 2 gemäß Fig. 8 auch spiralig auf einer sehr dünnen Platte bzw. Folie als Fläche 21 angeordnet sein, wobei die Wicklung 2 spiralig um die Spulenachse S (bzw. um die elektromagnetische kAchse) herum angeordnet ist. Diese Flächen können dann paketweise dicht aneinander angeordnet werden, wobei deren Innen-bzw. Außenenden A und B wahlweise hintereinander oder parallel zueinander schaltbar sind.

In der in Fig. 9 dargestellten Ausführungsform ist zwischen I und II eine Abwicklung einer Spulenlage gemäß Fig. 2 dargestellt (1 Wicklungslänge = 1n). Die einzelnen Spuren bzw. Stromleiter 2 sind als a - e gekennzeichnet. In Fig. 9a links ist wiederum der Anfang der Spulenlage zwischen I - II wiedergegeben. Fig. 9b zeigt einen Schnitt entlang der Linie III - III in Fig. 9a. Durch überbrückungskontakte 16 wird bei der Wicklung der ersten Lage einer Spule die Spur a mit der Spur b (bzw. die Spuren b mit c, c mit d und d mit e) verbunden, wobei die überbrückungskontakte 16 von der Oberseite zur Unterseite einer elektrisch isolierenden Kunststoff-Folie 5 hindurchreichen. Damit wird erreicht, daß die Spuren bzw. Stromleiter a - e der ersten Folienlage in Reihe miteinander verbunden sind, ehe diese Serienverbindung in der nächstdrüberliegenden Folienlage fortgesetzt wird.

Wenn eine auf diese Weise gefertigte Spule bzw. elektromagnetische Wicklung im Anschluß an das Wickeln einer Temperaturbehandlung unterworfen wird, sind die überbrückungskontakte mit den zu überbrückenden Enden der Stromleiterpfade fest verschmelzbar.

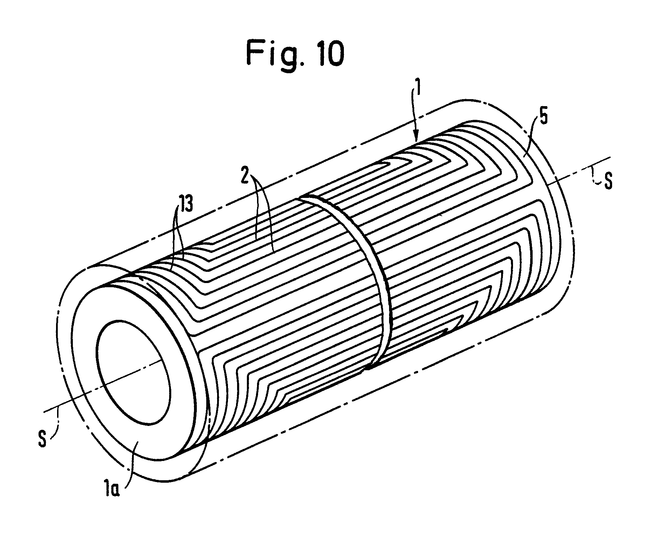

Der Aufdruck bzw. die Anordnung der Stromleiter 2 auf die elektrisch isolierende Folie kann gemäß Fig. 10 auch in vollständig geschlossenen Schleifen vorliegen deren längs des Umfangs verlaufende Strecken durch endseitig um 180° des Umfangs herum verlaufende Strompfade 13 miteinander verbunden werden.

Bezugszeichenliste

1. Elektromagnetische Wicklung
1a Spule
2 Stromleiter
3 elektrisch leitende Folie (aus Metall oder Kunststoff oder elektrisch leitend beschichtetem Kunststoff)
4 Metallbeschichtung
5 elektrisch isolierende Kunststoff-Folie (Isolationsschicht)
6 Einzelwicklungen
7 Metallschicht aus metallstaubhaltigem Pulver
8 Zonenbereiche
9 Streifen
10 Lagen übereinander
11 Rohr
12 Elektro-oder Permanentmagnet
14 Stirnkappenanordnungen
15 Kombinationskontakte
16 Überbrückungskontakte
17 Lagenstapel
18 Achse
19 Kommutator
20 Drehlager
21 Flächen
S = Spuleneingangsachse
A = Innenende einer Stromleiterwicklung 2
B = Außenende einer Stromleiterwicklung 2
C = Seitenenden

**Ansprüche**

1. Elektromagnetische Anordnung, insbesondere elektromagnetische Wicklung mit voneinander elektrisch isolierten Stromleiter-Wicklungen, **dadurch gekennzeichnet,** daß die Stromleiter-Wicklungen (2) als elektrisch leitende Folie (3) ausgebildet ist.

2. Elektromagnetische Anordnung nach Anspruch 1, **dadurch gekennzeichnet,** daß die Folie (3) aus einer Metallbeschichtung (4) einer elektrisch isolierenden Kunststoff-Folie (5) besteht.

3. Elektromagnetische Anordnung nach Anspruch 1, **dadurch gekennzeichnet,** daß die Folie (3) aus einem elektrisch leitenden Kunststoff besteht, zwischen deren Einzelwicklungen (6) eine Isolationsschicht (5) vorzugsweise als Folie aus elektrisch nicht-leitendem Kunststoff vorgesehen ist.

4. Elektromagnetische Anordnung nach Anspruch 2, **dadurch gekennzeichnet,** daß die Metallbeschichtung (4) auf der elektrisch isolierenden Folie (5) aus gebundenem metallstaubhaltigem Pulver (7) bzw. einem Pulver aus elektrisch leitendem Material besteht.

5. Elektromagnetische Anordnung nach Anspruch 2 oder 3, **dadurch gekennzeichnet,** daß die Metallschicht (4) in Zonenbereichen (8) z.B. in Streifen (9) auf die elektrisch isolierende Folie (5) aufgebracht ist.

6. Elektromagnetische Anordnung nach Anspruch 3, **dadurch gekennzeichnet,** daß die elektrisch leitende Kunststoff-Folie (3) in Zonenbereichen (8) z.B. in Streifen (9) auf die elektrisch isolierende Folie (5) aufgebracht ist.

7. Elektromagnetische Anordnung nach einem der vorhergehenden Ansprüche, **dadurch gekennzeichnet,** daß die elektrisch leitende Folie (3) in mehreren Lagen (10) übereinander gewickelt ist.

8. Elektromagnetische Anordnung nach einem der vorhergehenden Ansprüche, **dadurch gekennzeichnet,** daß die elektrisch leitende Folie (3) als Bestandteil des Umfangs eines nicht-metallischen Rohrs (11) gewickelt ist.

9. Elektromagnetische Anordnung nach Anspruch 8, **dadurch gekennzeichnet,** daß die elektrisch leitende Folie (3) in Streifen (9) schräg zur Längsachse des Rohrs (11) auf dessen Umfangsbereich angeordnet ist.

10. Elektromagnetische Anordnung nach einem der vorhergehenden Ansprüche, **dadurch gekennzeichnet,** daß mehrere, voneinander elektrisch unabhängige Wicklungen übereinander gewickelt sind.

11. Elektromagnetische Anordnung nach einem der vorhergehenden Ansprüche, **dadurch gekennzeichnet,** daß elektrisch zueinander gehörende Stromleiter-Enden (C; A,B) zwecks Parallel-oder Serienschaltung miteinander verbunden sind.

12. Elektromagnetische Anordnung nach Anspruch 11, **dadurch gekennzeichnet,** daß elektrisch zueinander gehörende Stromleiter-Enden (C) über Stirnkappen-Anordnungen (14) miteinander verbunden sind.

13. Elektromagnetische Anordnung insbesondere nach Anspruch 4, **dadurch gekennzeichnet,** daß die Stromleiter-Wicklungen (2) auf die elektrisch isolierende Kunststoff-Folie (5) aufgedruckt sind.

14. Elektromagnetische Anordnung nach einem der vorhergehenden Ansprüche, **dadurch gekennzeichnet,** daß auf einer elektrisch isolierenden Kunststoff-Folie (5) mehrere Stromleiter-Wicklungen (2) nebeneinander angeordnet sind.

15. Elektromagnetische Anordnung nach Anspruch 14, **dadurch gekennzeichnet,** daß mehrere einzelne Stromleiter-Wicklungen (2) einer einzelnen Wicklungslage (10) mittels überbrückungskontakten (16) in Serie hintereinander geschaltet sind.

16. Elektromagnetische Anordnung nach einem der vorhergehenden Ansprüche, **dadurch gekennzeichnet,** daß die Stromleiter-Wicklungen (2) in einer quer zur magnetischen Längsachse (S) verlaufenden Ebene spiralig von innen nach außen auf der elektrisch isolierenden Folie (5) angebracht sind und mehrere Lage dieser Stromleiterspiralen eng aneinander in einem Lagenstapel (17) elektrisch miteinander verbunden sind.

Fig. 1

Fig. 2

Fig. 2a

Fig. 3

Fig. 4

Fig. 5

Fig. 6

Fig. 7

# Fig. 8

# Fig. 9a

# Fig. 9b

# Fig. 10

## EINSCHLÄGIGE DOKUMENTE

EP 87114963.9

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | <u>DE - C1 - 906 831</u> (SLIWKA)<br><br>  * Gesamt *<br><br>    -- | 1,2,4,<br>7,11,<br>13,14,<br>16 | H 02 K 3/26<br><br>H 01 F 5/00 |
| X | <u>DE - A1 - 2 033 616</u> (RAGONOT)<br><br>  * Seite 2, letzter Absatz –<br>  Seite 3, erster Absatz;<br>  Seiten 5-10; Fig. 1-13 *<br><br>    -- | 1,2,5,<br>8,11 | |
| X | <u>GB - A - 1 235 041</u> (ANO-COIL)<br><br>  * Seite 1, Zeilen 15-26;<br>  Seite 2, Zeile 25 –<br>  Seite 3, Zeile 36; Fig.<br>  1-4; | 1,7-9 | |
| X | <u>DD - A - 125 784</u> (ABENDROTH)<br><br>  * Seite 1, Zeile 4 – Seite 2,<br>  Zeile 26; Ansprüche; Fig.<br>  1,2 *<br><br>    -- | 1,3,6 | **RECHERCHIERTE SACHGEBIETE (Int. Cl. 4)** |
| X | <u>EP - A2 - 0 101 894</u> (BASF)<br><br>  * Seiten 8-9 *<br><br>    -- | 1,3 | H 02 K<br><br>H 01 F<br><br>H 01 B 1/00 |
| X | <u>DE - B2 - 2 315 498</u> (BENDIX)<br><br>  * Spalte 3, Zeile 29 –<br>  Spalte 4, Zeile 37; Fig.<br>  1-8 *<br><br>    -- | 1,2,7,<br>11,14,<br>16 | |

Der vorliegende Recherchenbericht wurde für alle Patentansprüche erstellt.

| Recherchenort | Abschlußdatum der Recherche | Prüfer |
|---|---|---|
| WIEN | 04-01-1988 | KUTZELNIGG |

| | EINSCHLÄGIGE DOKUMENTE | | EP 87114963.9 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | GB - A - 1 267 546 (VAN DEN BERG)<br><br>* Seite 1, Zeile 9 - Seite 3, Zeile 22; Fig. 1-4,8 *<br><br>-- | 1,2,4,<br>7,13 | |
| X | US - A - 4 271 370 (DIMEO)<br><br>* Spalte 1, Zeile 64 - Spalte 3, Zeile 55; Fig. 1-7 *<br><br>-- | 1,7,11,<br>13,14,<br>16 | |
| X | US - A - 3 944 857 (FAULHABER)<br><br>* Spalte 2, Zeile 51 - Spalte 8, Zeile 59; Fig. 1-5 *<br><br>-- | 1,7,11-<br>15 | |
| X | GB - A - 1 210 668 (MATSUSHITA)<br><br>* Ansprüche 1-3; Seite 1, Zeile 65 - Seite 2, Zeile 109; Fig. 1-10 *<br><br>-- | 1,2,4,<br>11 | RECHERCHIERTE SACHGEBIETE (Int. Cl.4) |
| X | CH - A5 - 564 875 (DAINIPPON)<br><br>* Spalte 2, Zeile 14 - Spalte 6, Zeile 23; Fig. 1-13 *<br><br>-- | 1,2,5,<br>7-11,<br>14 | |
| X | CH - A - 447 377 (FRAKO)<br><br>* Spalte 2, Zeile 35 - Spalte 4, Zeile 35; Fig. 1,2 *<br><br>---- | 1,2,5,<br>7,8,11 | |

Der vorliegende Recherchenbericht wurde für alle Patentansprüche erstellt.

| Recherchenort | Abschlußdatum der Recherche | Prüfer |
|---|---|---|
| WIEN | 04-01-1988 | KUTZELNIGG |